# EUROPEAN PATENT APPLICATION

(11) **EP 4 435 989 A1**
(43) Date of publication of application: **25.09.2024**
(21) Application number: 23169650.1
(22) Date of filing: 25.04.2023
(51) Int. Cl.: H02H 7/18, H02J 7/00

(54) **ELECTRICAL PROTECTION CIRCUIT FOR ENERGY STORAGE UNIT**

(30) Priority: 24.03.2023 GR 20230100247
(71) Applicant: Hitachi Energy Ltd, 8050 Zürich (CH)
(72) Inventor: BAKAS, Panagiotis, 722 12 Västerås (GR); SODERBLOM, Anton, 749 43 Enköping (SE); ZHANG, Zichi, 723 58 Västerås (SE); BAI, Haofeng, 72348 Västerås (SE); VIATKIN, Aleksandr, 723 38 Västerås (SE)
(74) Representative: Zacco Sweden AB

(57) **Abstract**

Embodiments herein provide an electrical protection circuit (100) for connecting an Energy Storage Unit, ESU (10) to a main power line (80). The electrical protection circuit (100) comprises first and second main terminals configured to be connected to a main power line, first and second ESU terminals connected to the ESU (10). The first main terminal is connected to the first ESU terminal via a first normally closed, NC, switch (20). The first main terminal is connected to the second main terminal via a normally open, NO switch (40). The first NC switch (20) is configured to be opened thereby to disconnect the ESU (10) from the main power line (80), and the NO switch (40) is configured to be closed thereby to bypass the ESU (10) from the main power line (80) in order to achieve electrical protection for the ESU (10).

## Description

### TECHNICAL FIELD

The present disclosure generally relates to energy storage units. More particularly, it relates to providing an electrical protection circuit for an energy storage unit, ESU.

### BACKGROUND

In general, an energy storage sector consists of several different branches of mediums/energy storage units, ESUs, to store energy. The ESUs include batteries, supercapacitors, or the like. In an event of a fault condition (for example, current overloading, rapid discharge, under voltage, or the like), the ESUs have to be protected.

An electrical protection circuit can be used to protect an ESU. The protection circuit can implement a method of electrical protection for protecting the ESU. However, while protecting the energy storage unit electrically, the ESU behaves differently depending on an implemented method of electrical protection. Also, while protecting the ESU, consequences such as thermal runaway, arcing, venting, fire, or the like, can cause short-circuit.

Further, in the prior art, for protecting different types of ESUs, different types of electrical protection circuits can be used, as the electrical protection circuit may not implement a single method of electrical protection for the different types of ESUs. For example, if a bypass protection method is implemented, then there may be possibility for protecting the supercapacitor depending on impedance of the bypass protection method. On the contrary, the battery may not be protected by implementing the bypass protection method due to thermal runaway.

In addition, while protecting the ESU, if an electrical system uses opening/breaking devices, the electrical system may have an open circuit, which can cause very high over-voltage.

### SUMMARY

Consequently, there is a need for a universal electrical protection circuit for protecting different types of ESUs by considering functionalities/features, which can be applicable for all the types of ESUs.

It is therefore an object of the present disclosure to provide an electrical protection circuit for an energy storage unit, ESU, to mitigate, alleviate, or eliminate all or at least some of the above-discussed drawbacks of presently known solutions.

This and other objects are achieved by means of an electrical protection circuit, as defined in the appended claims. The term exemplary is in the present context to be understood as serving as an instance, example or illustration.

According to a first aspect of the present disclosure, an electrical protection circuit for connecting an energy storage unit, ESU, to a main power line is provided. The electrical protection circuit comprises a first main terminal configured to be connected to the main power line, a second main terminal configured to be connected to the main power line, wherein the second main terminal is configured for a lower electric potential than the first main terminal. The first ESU terminal configured to be connected to a positive terminal of the ESU and a second ESU terminal configured to be connected to a negative terminal of the ESU. The first main terminal is connected to the first ESU terminal via a first normally closed, NC, switch. The electrical protection circuit comprises a first diode with an anode connected to the first main terminal and a cathode connected to the first ESU terminal. A parallel combination of the first NC switch and the first diode forms a closed path for a charging current and a discharging current flowing between the main power line and the ESU during operation. The first main terminal is connected to the second main terminal via a normally open, NO, switch, and a second diode being connected in parallel with the NO switch with a cathode connected to the first main terminal, and an anode connected to the second main terminal. The first NC switch is configured to be opened thereby to disconnect the ESU from the main power line. The NO switch is configured to be closed thereby to bypass the ESU from the main power line in order to achieve electrical protection for the ESU.

Thus, with the proposed topology, controllable and safe electrical protection circuit is provided, which combines disconnection and bypassing functionalities for providing electrical protection to the ESU.

In some embodiments, the electrical protection circuit comprises a discharging circuit. The discharging circuit comprises a resistor in series with a discharging switch. The discharging circuit is connected between the first ESU terminal and the second ESU terminal. The discharging switch is a NO switch. The discharging switch is configured to be closed thereby to discharge the ESU through the resistor in order to achieve the electrical protection for the ESU.

Advantageously, the proposed electrical protection circuit utilizes discharging functionality along with the disconnection and bypassing functionalities for providing electrical protection to the ESU.

Further, the electrical protection circuit disclosed herein may act as universal protection circuit, as the combined functionalities (disconnection, bypassing, and discharging) of the electrical protection circuit may be applicable for all types of ESUs. For example, the electrical protection circuit may provide electrical protection for both battery unit and supercapacitor (exemplary types of the ESUs).

Further, the usage of the electrical protection circuit disclosed herein for electrically protecting the ESU may increase reliability.

Further, the electrical protection circuit disclosed herein may comprise small sized and less expensive components.

In addition, as the electrical protection circuit disclosed herein may be used for different levels, availability of an Energy Storage, ES, system comprising the ESU may be increased.

In some embodiments, the electrical protection circuit further comprises a second NC switch connected in series with the first NC switch. The second NC switch is configured to disconnect the ESU and the discharging circuit from the main power line thereby achieving electrical protection for the ESU.

In some embodiments, the electrical protection circuit further comprises a third NC switch connected in series with the ESU. The third NC switch is configured to disconnect the ESU from the discharging circuit and the main power line thereby achieving electrical protection for the ESU.

In some embodiments, the electrical protection circuit further comprises a second NC switch connected in series with the first NC switch and a third NC switch connected in series with the ESU. A combination of the second NC switch and the third NC switch is configured to disconnect the ESU and the discharging circuit from the main power line thereby achieving electrical protection for the ESU.

In some embodiments, the second NC switch is configured to be opened to disconnect the ESU and the discharging circuit from the main power line, and the third NC switch is configured to be opened after opening of the second NC switch and after discharging of the ESU through the resistor, thereby achieving electrical protection for the ESU.

In some embodiments, the third NC switch is configured to be opened after discharging of the ESU through the resistor and the second NC switch is configured to be opened after opening of the third NC switch, thereby achieving electrical protection for the ESU.

In some embodiments, the electrical protection circuit further comprises a resistor connected in parallel to the first NC switch, wherein the closing of the NO switch causes the ESU to discharge through the resistor thereby achieving electrical protection for the ESU.

In some embodiments, the electrical protection circuit further comprises a resistor connected in parallel to the first NC switch and a second NC switch connected in between the ESU and the parallel combination of the resistor and the first NC switch.

In some embodiments, the first NC switch connected in parallel to the resistor is configured to be opened for causing the charging current to flow through the first diode or the second diode, the NO switch is configured to be closed for discharging the ESU, and the second NC switch connected in between the ESU and the parallel combination of the resistor and the first NC switch is configured to be opened for disconnecting the ESU from the main power line, when the ESU is discharged.

In some embodiments, the first NC switch, the second NC switch, the third NC switch, the NO switch, and the discharging switch are of same or different types and connectable in series or parallel configuration.

In some embodiments, the ESU is at least one of a battery unit or a supercapacitor.

In some embodiments, the electrical protection circuit is configured to maintain uninterrupted current flow for rest of system other than the ESU during the bypassing.

According to a second aspect of the present disclosure, a method for connecting an Energy Storage Unit, ESU, to a main power line is provided. The method comprises opening a first normally closed, NC, switch to disconnect the ESU from a main power line. A parallel combination of the first NC switch and a first diode forms a closed path for charging current and a discharging current flowing between the main power line and the ESU during operation. Opening the first NC switch causes the charging current to flow from the main power line to the ESU through a first diode. Opening the first NC switch causes the discharging current to flow to the main line through a second diode being connected in parallel with a normally open, NO, switch, thereby disconnecting the ESU. The method comprises closing the NO switch to bypass current flowing through the ESU. Closing the NO switch causes the charging current and the discharging current to get diverted to least resistance path provided by the parallel combination of the closed NO switch and the second diode thereby bypassing the ESU. The electrical protection is provided to the ESU by opening the first NC switch to disconnect the ESU from the main power line and by closing the NO switch to bypass the ESU from the main power line.

In some embodiments, the method comprises closing a discharging switch to discharge the ESU through a resistor to provide the electrical protection to the ESU. The resistor is in series with the discharging switch, wherein the discharging switch is another NO switch.

Thus, the ESU may be protected by combining disconnection, bypassing and discharging functionalities.

According to a third aspect of the present disclosure, a module for connecting an Energy Storage Unit, ESU, to a main power line is provided. The module comprises a first main terminal configured to be connected to the main power line. The module comprises a second main terminal configured to be connected to the main power line, wherein the second main terminal is configured for a lower electric potential than the first main terminal. The module comprises a first ESU terminal configured to be connected to a positive terminal of the ESU. The module comprises a second ESU terminal configured to be connected to a negative terminal of the ESU. The module comprises an electrical protection circuit according to the first aspect of the present disclosure..

Other advantages may be readily apparent to one having skill in the art. Certain embodiments may have some, or all of the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Fig. 1 discloses an electrical protection circuit for Energy Storage Unit, ESU according to some examples;
Figs. 2A and 2B disclose an electrical protection circuit connecting an ESU to main power line according to some examples;
Figs. 3A and 3B disclose an electrical protection circuit in which a first normally closed, NC, switch configured to be opened to disconnect an ESU from a main power line according to some examples;
Figs. 4A and 4B disclose an electrical protection circuit in which a normally open, NO, switch is configured to be closed to bypass an ESU from a main power line according to some examples;
Figs. 5A and 5B disclose an electrical protection circuit in which a discharging circuit is configured to be closed to discharge an ESU through a resistor according to some examples;
Figs. 6, 7, 8, and 9 disclose an example electrical protection circuit;
Fig. 10A and 10B disclose an electrical protection circuit in which an ESU and a discharging circuit are disconnected from a main power line for providing electrical protection for the ESU according to some examples;
Fig. 11 discloses an electrical protection circuit in which closing of a NO switch causes discharging of an ESU according to some examples;
Fig. 12 discloses an electrical protection circuit in which a combination of a second NC switch and a third NC switch is configured to disconnect an ESU from a discharging circuit and a main power line according to some examples;
Fig. 13 discloses an electrical protection circuit in which a first NC switch connected in parallel with a resistor and a second NC switch connected in series with an ESU are operated to disconnect an ESU from a main power line according to some examples;
Fig. 14 is a flowchart illustrating example method steps; and
Fig. 15 discloses a module for providing electrical protection to an ESU according to some examples.

### DETAILED DESCRIPTION

Aspects of the present disclosure will be described more fully hereinafter with reference to the accompanying drawings. The apparatus and methods disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

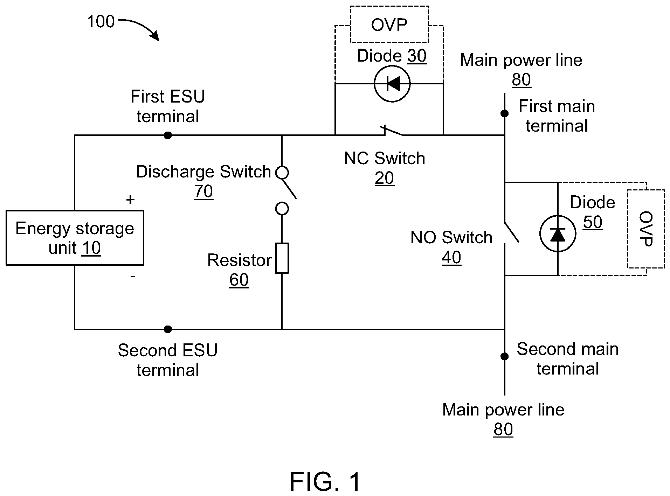

Fig. 1 discloses an electrical protection circuit 100 for an Energy Storage Unit, ESU 10. The electrical protection circuit 100 referred herein is configured for providing electrical protection to the ESU 10. The electrical protection may be provided to the ESU 10 in an event of one or more fault conditions such as, but not limited to, current overloading, rapid discharge, under voltage, or the like. In some examples, the ESU 10 may comprise one or more of: a battery unit, a supercapacitor, or the like.

In the prior art, the electrical protection circuit may implement a method of electrical protection for protecting the ESU 10. However, while protecting the energy storage unit electrically, the ESU 10 behaves differently depending on an implemented method of electrical protection. Further, in the prior art, for protecting different types of ESUs, different types of electrical protection circuits can be used, as the electrical protection circuit may not implement a single method of electrical protection for the different types of ESUs.

Therefore, according to embodiments of the present disclosure, the controllable, safe, and universal electrical protection circuit 100 is provided for providing electrical protection to the ESU 10.

The electrical protection circuit 100 connects the ESU 10 to the main power line 80. The electrical protection circuit 100 comprises a first main terminal, a second main terminal, a first ESU terminal, a second ESU terminal, a first normally closed, NC, switch 20, a first diode 30, a normally open, NO, switch 40, and a second diode 50.

The first main terminal and the second main terminal are configured to be connected to the main power line 80. The second main terminal is configured for a lower electric potential than the first main terminal. The first ESU terminal is configured to be connected to a positive terminal of the ESU 10. The second ESU terminal is configured to be connected to a negative terminal of the ESU 10.

The first main terminal is connected to the first ESU terminal via the first NC switch 20.

An anode of the first diode 30 is connected to the first main terminal and a cathode of the first diode 30 is connected to the first ESU terminal. A parallel combination of the first NC switch 20 and the first diode 30 forms a closed path for a charging current and a discharging current flowing between the main power line 80 and the ESU 10 during operation.

The first main terminal is connected to the second main terminal via the NO switch 40 and the second diode 50. The second diode 50 is connected in parallel with the NO switch 40 with a cathode connected to the first main terminal and an anode connected to the second main terminal.

In some examples, the first NC switch 20, and the NO switch 40 may be of same or different types and connectable in series or parallel configuration. Examples of the switch may include, but are not limited to, a mechanical switch, an electro-mechanical switch, a Silicon based switch, a Wide bandgap, WBG, based semiconductor switch, a pyrotechnical switch, an electron tube, or a combination thereof. As would be understood, any similar type of above described switch may be considered herein.

The first NC switch 20 is configured to be opened thereby to disconnect the ESU 10 from the main power line 80. The NO switch 40 is configured to be closed thereby to bypass the ESU 10 from the main power line 80. Thereby, achieving electrical protection for the ESU 10.

Opening of the first NC switch 20 causes the charging current to flow from the main power line 80 to the ESU 10 through the first diode 30 and causes the discharging current to flow to the main power line 80 through the second diode 50. Thereby disconnecting the ESU 10 from the main power line 80.

Closing of the NO switch causes the charging current and the discharging current to be diverted to at least resistance path provided by the parallel combination of the closed NO switch 40 and the second diode 50. Thereby, bypassing the ESU 10. During the bypassing of the ESU 10 from the main power line 80, the electrical protection circuit 100 may be configured to maintain uninterrupted current flow for rest of system other than the ESU 10. The system referred herein may be an electrical system/Energy Storage, ES, system comprising the ESU 10.

Thus, the electrical protection circuit 100 disclosed herein utilizes disconnection and bypassing functionality/protection methods for protecting the ESU 10 electrically.

The electrical protection circuit 100 may further comprise a discharging circuit. The discharging circuit may comprise a resistor 60 in series with a discharging switch 70. The discharging circuit may be connected between the first ESU terminal and the second ESU terminal. In some examples, the discharging switch 70 may be another NO switch. In some examples, the discharging switch 70 may be of different types and may be connected in series or parallel configuration. Examples of the switch may include, but are not limited to, a mechanical switch, an electro-mechanical switch, a Silicon based switch, a WBG semiconductor switch, a pyrotechnical switch, an electron tube, or a combination thereof.

The discharging switch 70 may be configured to be closed thereby to discharge the ESU 10 through the resistor 60 in order to achieve the electrical protection for the ESU 10. In some examples, the discharging of the ESU 10 may be carried out for a long period of time (for example, hours/days).

Thus, discharging functionality may also be combined with the disconnection and bypassing functionality for providing the electrical protection to the ESU 10. With the disconnection, bypassing, and discharging functionalities combined, the electrical protection circuit 100 may be designed for the both the battery unit and the supercapacitor (i.e., for any type of ESUs 10). However, it should be noted that an arrangement of the components of the electrical protection unit 100 may be differed for each type of the ESU 10.

Optionally, the electrical protection circuit 100 may comprise an over voltage protection for switches such as the first NC switch 20, and the NO switch 40.

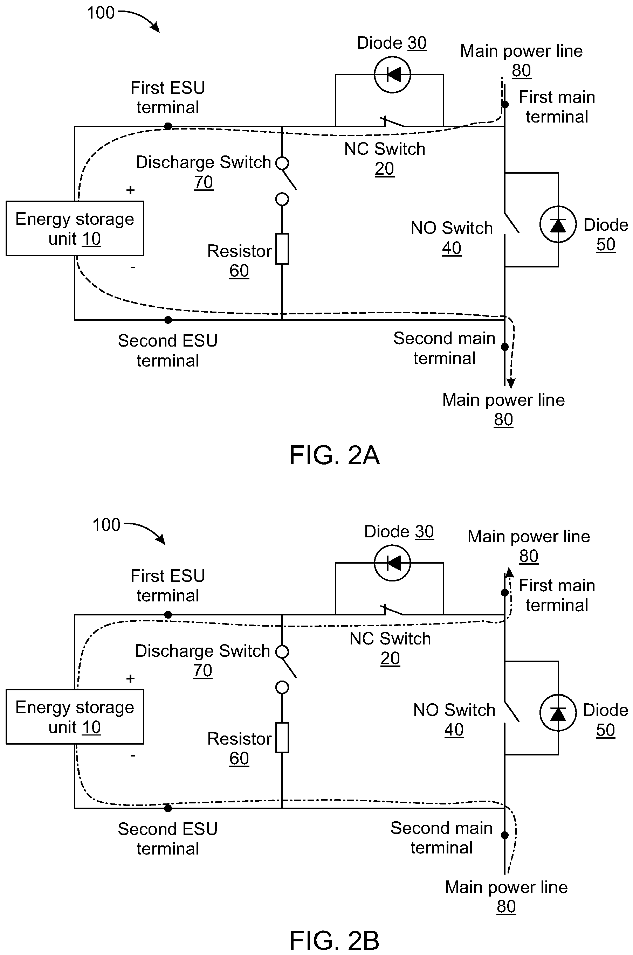

Figs. 2A and 2B disclose the electrical protection circuit 100 configured to connect the ESU 10 to the main power line 80 and protect the ESU 10 by combining disconnection, bypassing, and discharging functionalities. The electrical protection circuit 100 comprises the first and second main terminals connected to the main power line 80, the first and second ESU terminals connected to the ESU 10, the first NC switch 20, the first diode 30, the NO switch 40, the second diode 50, and the discharging circuit. The discharging circuit comprises the resistor 60 and the discharging switch 70.

The parallel combination of the first NC switch 20 and the first diode 30 is configured to provide a closed path for the charging current and the discharging current flowing between the main power line and the ESU during operation. The curve indicated in Fig. 2A represents a flow of the charging/operational current in the circuit 100 during a normal operation of the circuit. The curve indicated in Fig. 2B represents the discharging current in the normal operation state of the ESU 10.

In the event of any fault conditions, the first NC switch 20 opens and disconnects the ESU 10 from the main power line 80. Upon disconnection of the ESU 10 from the main power line 80, the NO switch 40 closes and bypasses the ESU 10 from the main power line 80. Due to the bypass, an operation of the electrical/ES system comprising the ESU 10 may be continued. The failed ESU 10 may be discharged while being disconnected from the main power line 80/ES system. The discharging switch 70 closes and causes the ESU 10 to discharge its energy through the resistor 60.

Thus, the electrical protection circuit 100 provides electrical protection to the ESU 10 by combining the disconnection, bypassing and/or discharging functionalities. Such an electrical protection circuit 100 may increase reliability and reduce time need for maintenance. Also, the electrical protection circuit 100 disclosed herein may comprise small sized and less expensive components, which ultimately reduces total cost of the electrical protection circuit 100. In addition, as the electrical protection circuit 100 may be used for different levels (for example, module level), availability of the ES system may be increased.

In some examples, using power electronic switches or the like, balancing functions may be implemented on energy string level, for example, NO/NC switches may be ON/OFF for certain period of time to balance energy modules of the ESU 10.

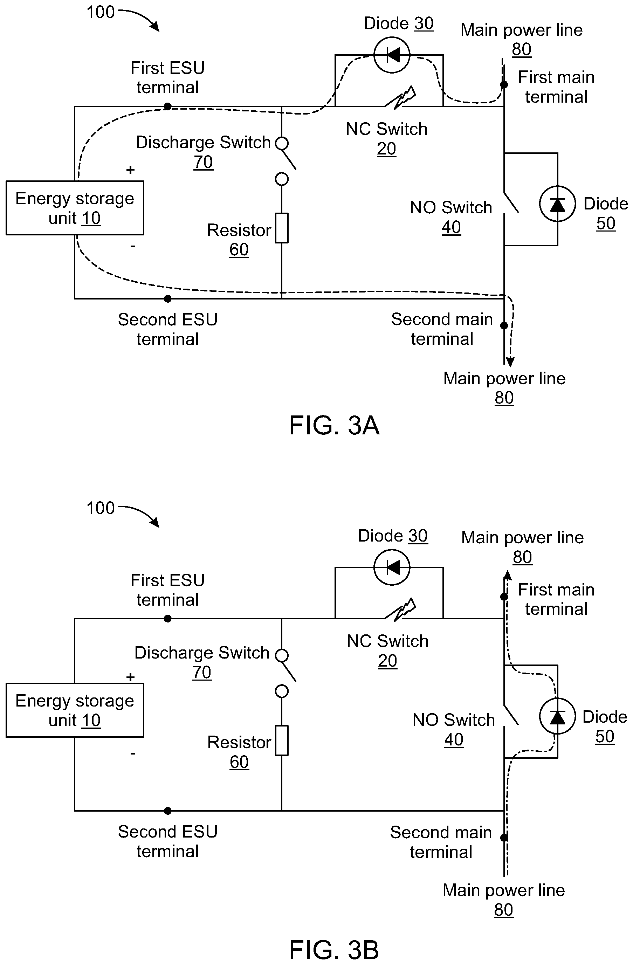

Figs. 3A and 3B disclose the electrical protection circuit 100 in which the first NC switch 20 is configured to be opened to disconnect the ESU 10 from the main power line 80.

For providing the electrical protection to the ESU 10, the first NC switch 20 opens/breaks in the event of any fault condition. Opening of the first NC switch 20 disconnects the ESU 10 from the main power line/main connection 80. Thereby, providing electrical protection to the ESU 10. After disconnecting the ESU 10 from the system, the electrical protection circuit 100 may allow de-energization of energy stored in the ESU 10.

Opening of the first NC switch 20 causes the first diode 30 and the second diode 50 to conduct depending on a direction of the charging current of the system. Opening of the first NC switch 20 causes the charging current to flow from the main power line 80 to the ESU 10 through the first diode 30, which is indicated by the curve in Fig. 3A. Opening of the first NC switch 20 causes the discharging current to flow to the main power line 80 through the second diode 50, which is indicated by the curve in Fig. 3B. Thereby disconnecting the ESU 10 from the main power line 80.

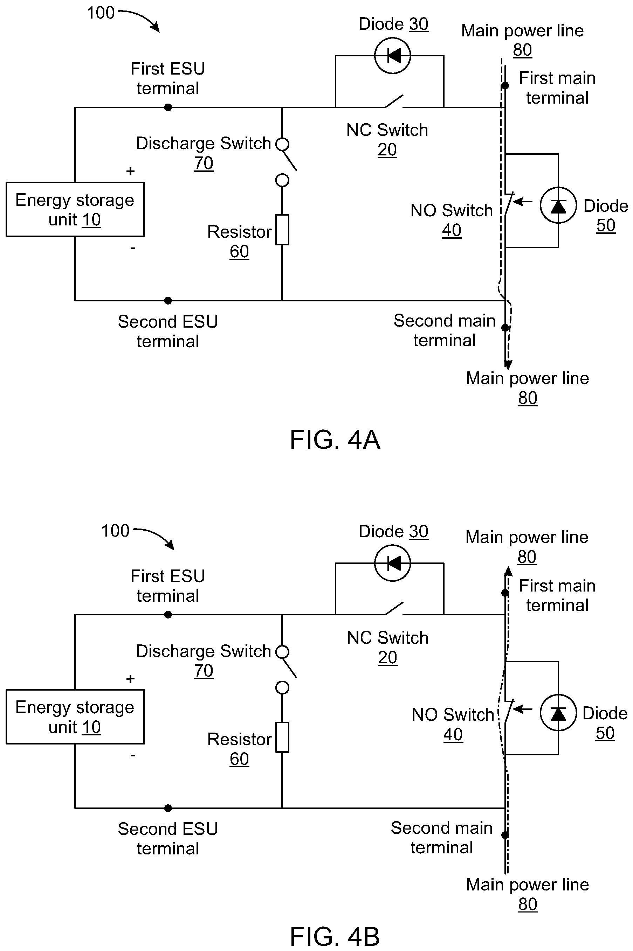

Figs. 4A and 4B disclose the electrical protection circuit 100 in which the NO switch 40 is configured to be closed to bypass the ESU 10 from the main power line 80.

When the ESU 10 is disconnected from the main power line 80, the NO switch 40 closes. Closing of the NO switch 40 bypasses the current totally from the ESU 10, as depicted in Figs. 4A and 4B. The curve in Fig. 4A represents the charging current of the system and the curve in Fig. 4B represents the discharging current of the system. During the bypassing of the ESU 10 from the main power line 80, the electrical protection circuit 100 may be configured to maintain uninterrupted current flow for rest of system other than the ESU 10.

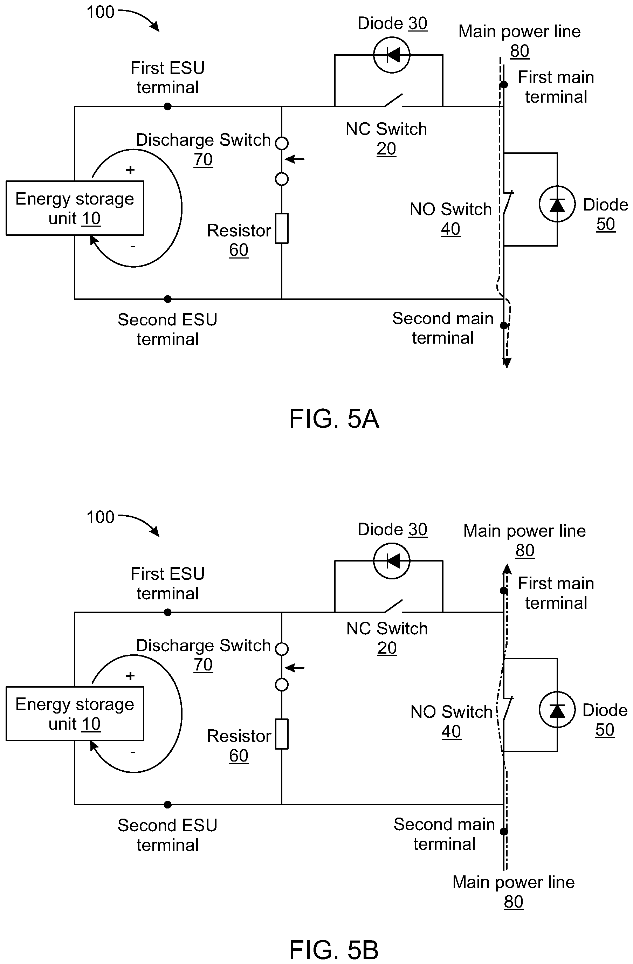

Figs. 5A and 5B disclose the electrical protection circuit 100 in which the discharging switch 70 is configured to be closed to discharge the ESU 10.

When the ESU 10 is disconnected and bypassed from the main power line 80, the discharging switch 70 closes/makes. Closing of the discharging switch 70 causes the ESU 10 to start discharging its energy through the resistor 60 connected in series with the discharging switch 70, as depicted in Figs. 5A and 5B. The curve in Fig. 5A represents the charging current of the system and the curve in Fig. 5B represents the discharging current of the system. The curve indicated around the ESU 10 in Figs. 5A and 5B represents a discharging curve of the disconnected ESU 10.

Thus, electrical protection for the ESU 10 may be achieved by discharging the ESU 10. While providing electrical protection to the ESU 10, short-circuits may be avoided since a discharge path is provided after disconnection of the protected ESU 10.

As would be understood, the discharging circuit comprising the discharging switch 70 and the resistor 60 may be arranged/designed in different configurations (including above) depending on the type of the ESU 10 and energy storage capability of the ESU 10.

In an example, consider that the ESU 10 comprises the battery unit, then the discharging circuit may be designed by considering, for example, resistance, and over-discharge of the battery unit. The resistance, for example, large resistance (several ohms and up) may be considered to guarantee requirements of long discharging time and to ensure that thermal runaway does not occur. The over-discharge of the battery unit may be considered when designing the discharge circuit that is for how to avoid over-discharge.

In another example, consider that ESU 10 comprises the supercapacitors. In such a case, the discharging circuit may be designed without considering the resistance. The resistance could be either small or large (from tenths of milliohms and up) due to the discharging time may not be limited as for the battery unit.

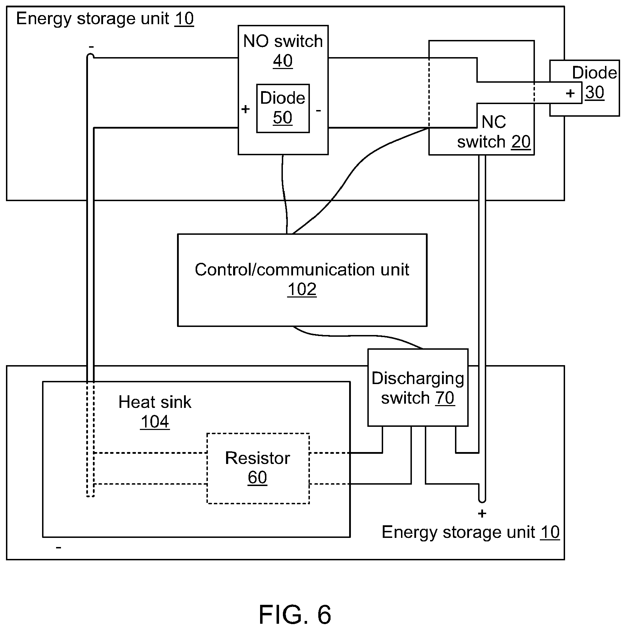

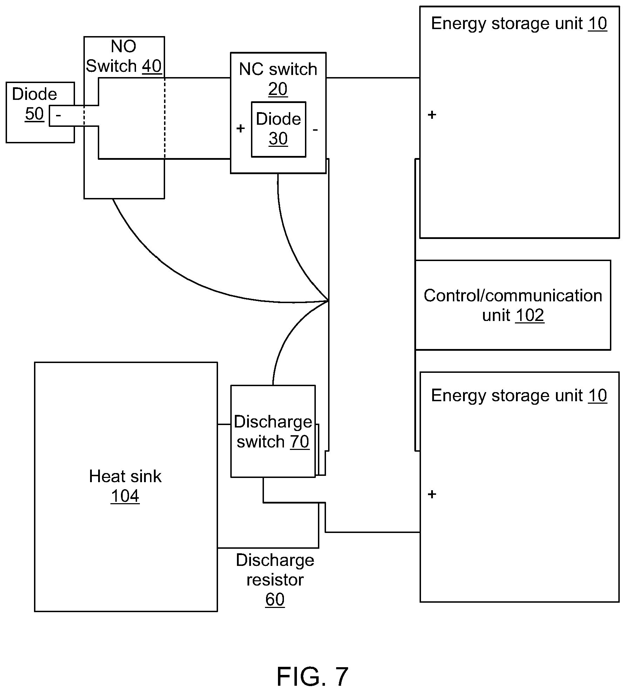

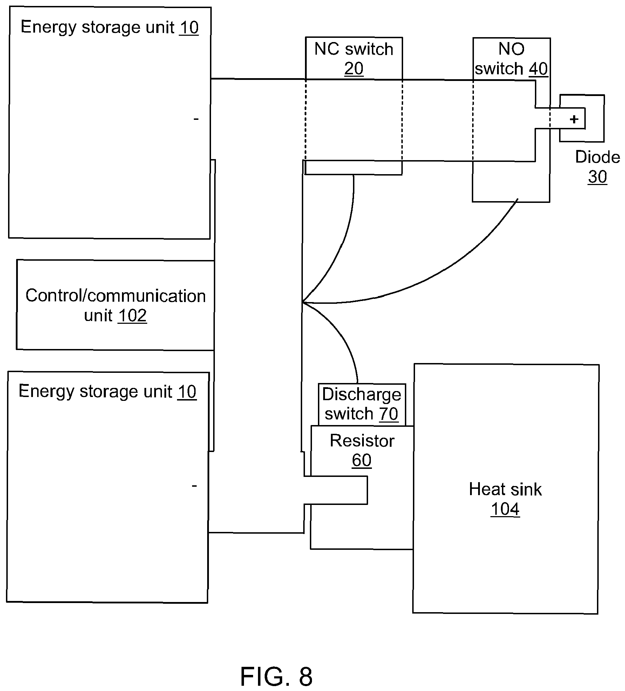

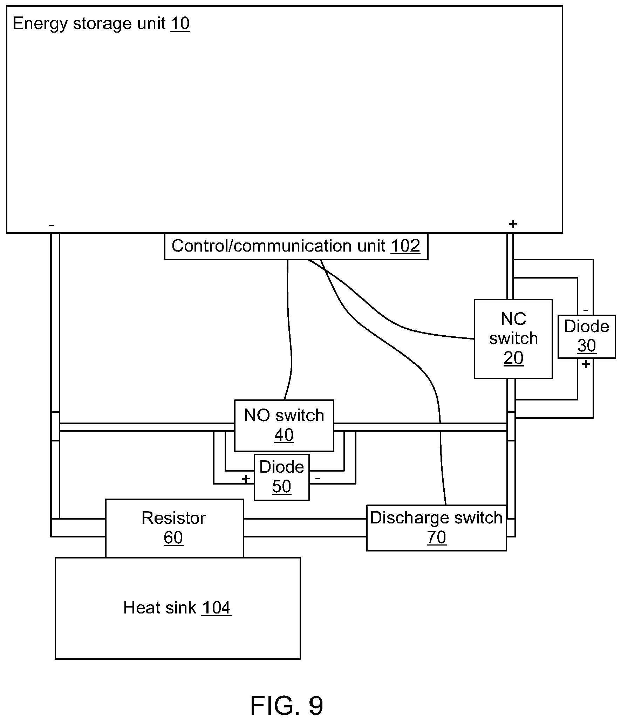

Figs. 6, 7, 8, and 9 discloses example electrical protection circuit. A front view of the electrical protection circuit provided for the ESUs 10 connected in parallel is depicted in Fig. 6. A right side view of the electrical protection circuit provided for the ESUs 10 connected in parallel is depicted in Fig. 7. A left side view of the electrical protection circuit provided for the ESUs 10 connected in parallel is depicted in Fig. 8. Atop view of the electrical protection circuit provided for the ESUs 10 connected in parallel is depicted in Fig. 9.

The electrical protection circuit is configured to provide electrical protection to the ESUs 10 connected in parallel. The ESUs 10 may comprise one or more of: a battery unit, and a supercapacitor.

The electrical protection circuit comprises the first NC switch 20, the first diode 30, the NO switch 40, the second diode 50, and the discharging circuit. The discharging circuit comprises the resistor 60 and the discharging switch 70.

The first NC switch 20, the NO switch 40, and the discharging switch 70 are connected to control/communication unit 102. The resistor 60 is connected to a heat sink 104.

For providing the electrical protection to the ESUs 10, the first NC switch 20 is configured to be opened to disconnect the ESUs 10 from the main power line. The NO switch 40 is configured to be closed to bypass the ESUs 10 from the main power line. The discharging switch 70 is configured to be closed to cause the ESUs 10 to discharge its energy through the resistor 60. Thus, the disconnection, bypassing and discharging functionalities are combined in order to achieve the electrical protection for the ESUs 10.

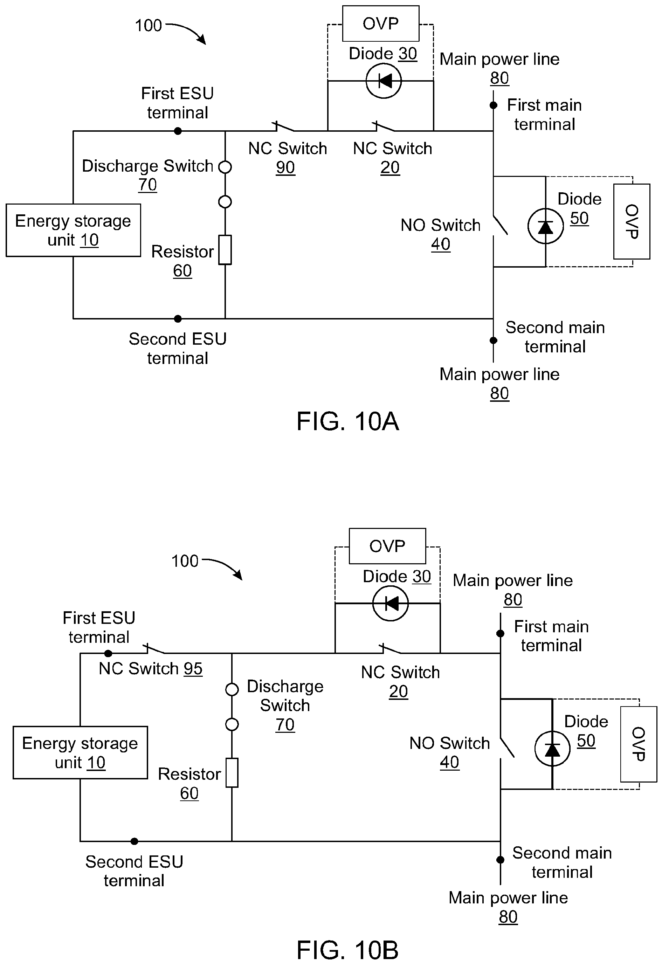

Figs. 10A and 10B disclose the electrical protection circuit 100 in which the ESU 10 and the discharging circuit are disconnected from the main power line 80 for providing the electrical protection for the ESU 10.

As depicted in Fig. 10A, the electrical protection circuit 100 comprises the first and second main terminals connected to the main power line 80, the first and second ESU terminals connected to the ESU 10, the first NC switch 20, the first diode 30, the NO switch 40, the second diode 50, a second NC switch 90, and the discharging circuit. The discharging circuit comprises the resistor 60 and the discharging switch 70. The second NC switch 90 is connected in series with the first NC switch 20. The second NC switch 90 connected in series with the first NC switch 20 may be configured to disconnect the ESU 10 and the discharging circuit (the resistor 60 and the discharging switch 70) from the main power line 80. Thereby achieving electrical protection for the ESU 10.

As depicted in Fig. 10B, the electrical protection circuit 100 comprises the first and second main terminals connected to the main power line 80, the first and second ESU terminals connected to the ESU 10, the first NC switch 20, the first diode 30, the NO switch 40, the second diode 50, a third NC switch 95, and the discharging circuit. The third NC switch 95 is connected in series with the ESU 10. The third NC switch 95 connected in series with the ESU 10 may be configured to disconnect the ESU 10 from the discharging circuit (the resistor 60 and the discharging switch 70) and the main power line 80. Thereby achieving electrical protection for the ESU 10.

In some embodiments, the first NC switch, the second NC switch 90, the third NC switch 95, the NO switch 40, and the discharge switch 70 described herein may be of different types and may be connected in series or parallel configuration. Examples of the switch may include, but are not limited to, a mechanical switch, an electro-mechanical switch, a Silicon based switch, a WBG semiconductor switch, a pyrotechnical switch, an electron tube, or a combination thereof.

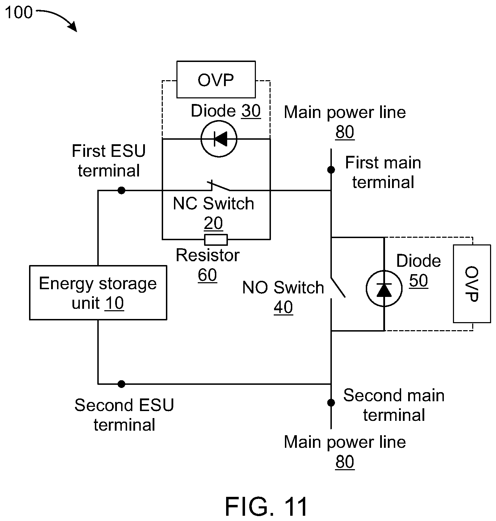

Fig. 11 discloses the electrical protection circuit 100 in which closing of the NO switch 40 causes discharging of the ESU 10. As depicted in Fig. 11, the electrical protection circuit 100 comprises the first NC switch 20, the first diode 30, the NO switch 40, the second diode 50, and the resistor 60. The resistor 60 is connected in parallel to the first NC switch 20.

The first NC switch 20 is configured to be opened thereby to disconnect the ESU 10 from the main power line 80 and the NO switch 40 is configured to be closed thereby to bypass the ESU 10 from the main power line 80 in order to achieve electrical protection for the ESU 10.

After bypassing the ESU 10 from the main power line 80, the resistor 60 may be automatically connected to the first NC switch 20. When the resistor is connected to the first NC switch 20, closing of the NO switch 40 may cause the ESU 10 to discharge through the resistor 60 thereby achieving electrical protection for the ESU 10. As would be understood, for discharging the ESU 10 by closing of the NO switch 40, an impedance of the resistor 60 has to be significantly higher than that of the first NC switch 20 and the first diode 30.

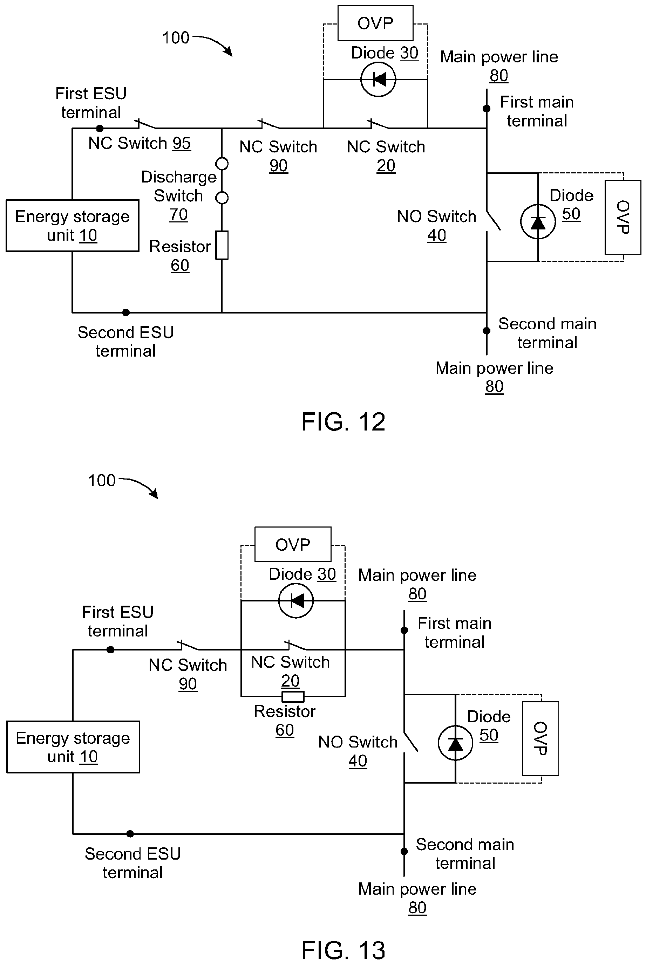

Fig. 12 discloses the electrical protection circuit 100 in which a combination of a second NC switch and a third NC switch is configured to disconnect an ESU from a discharging circuit and a main power line. As depicted in Fig. 12, the electrical protection circuit 100 comprises the first and second main terminals connected to the main power line 80, the first and second ESU terminals connected to the ESU 10, the first NC switch 20, the first diode 30, the NO switch 40, the second diode 50, the second NC switch 90, the third NC switch 95, and the discharging circuit. The discharging circuit comprises the resistor 60 and the discharging switch 70.

The second NC switch 90 is connected in series with the NC switch 20, thereby connecting the second NC switch 90 between the discharging circuit and the first NC switch 20.

The third NC switch 95 is connected in series with the ESU 10, thereby connecting the third NC switch 95 between the ESU 10 and the discharging circuit.

A combination of the second NC switch 90 and the third NC switch 95 is configured to disconnect the ESU 10 from the discharging circuit and the main power line 80. Thereby achieving electrical protection for the ESU 10.

More specifically, the first NC switch 20 is configured to be opened to disconnect the ESU 10 from the main power line 80 and the NO switch 40 is configured to be closed to bypass the ESU from the main power line. Operations of the first NC switch 20 and the NO switch 40 may precede the operation of the second NC switch 90 and the third NC switch 95.

In some embodiments, the second NC switch 90 may be configured to be opened to disconnect the ESU and the discharging circuit from the main power line 80, and the third NC switch 95 may be configured to be opened after opening of the second NC switch 90 and after discharging of the ESU through the resistor 60. Thereby, achieving electrical protection for the ESU 10.

In some embodiments, the third NC switch 95 may be configured to be opened after discharging of the ESU through the resistor 60 and the second NC switch is configured to be opened after opening of the third NC switch 95. Thereby achieving electrical protection for the ESU 10.

Fig. 13 discloses an electrical circuit in which the first NC switch connected in parallel with the resistor and the second NC switch connected in series with an ESU are operated to disconnect an ESU from the main power line. As depicted in Fig. 13, the electrical protection circuit 100 comprises the first NC switch 20, the first diode 30, the NO switch 40, the second diode 50, the second NC switch 90, and the resistor 60.

The resistor 60 is connected in parallel to the first NC switch 20. The second NC switch 90 is connected in between the ESU 10 and the parallel combination of the resistor 60 and the first NC switch 20.

Opening of the first NC switch 20 and the second NC switch 90 may be controlled to disconnect the ESU 10 from the main power line 80. Thereby, achieving the electrical protection for the ESU 10.

More specifically, operations of the first NC switch 20 and the NO switch 40 may precede the operation of the second NC switch 90. The first NC switch 20 connected in parallel to the resistor is configured to be opened for causing the charging current to flow through the first diode or the second diode. The NO switch 40 is configured to be closed for discharging the ESU 10. The second NC switch 90 connected in between the ESU 10 and the parallel combination of the resistor 60 and the first NC switch 20 is configured to be opened for disconnecting the ESU 10 from the main power line 80, when the ESU 10 is discharged.

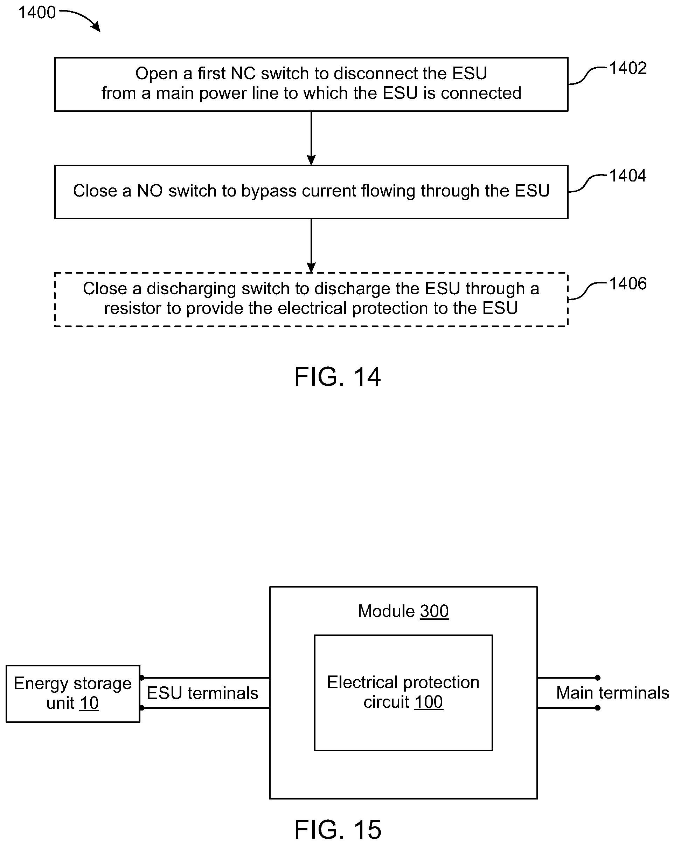

Fig. 14 is a flowchart illustrating example method steps of a method 1400 for connecting the ESU to the main power line and providing electrical protection to the ESU. In some examples, the ESU may comprise one or more of: a battery unit, and a supercapacitor.

At step 1402, the method 1400 comprises opening the first NC switch to disconnect the ESU from the main power line. A parallel combination of the first NC switch and the first diode forms a closed path for both charging current and discharging current flowing between the main power line and the ESU during operation. Opening the first NC switch causes the charging current to flow from the ESU through the first diode. Opening of the first NC switch causes the discharging current to flow to the main power line through the second diode connected in parallel to NO switch, thereby disconnecting the ESU.

At step 1404, the method 1400 comprises closing the NO switch to bypass current flowing through the ESU. Closing the NO switch causes the charging current and the discharging current to get diverted to at least resistance path provided by the parallel combination of the closed NO switch and the second diode, thereby bypassing the ESU.

Thus, the electrical protection is provided to the ESU by opening the first NC switch to disconnect the ESU from the main power line and by closing the NO switch to bypass the ESU from the main power line.

In some embodiments, the method may further comprise maintaining an uninterrupted current flow for rest of the system other than the ESU during the bypassing.

Optionally, at step 1406, the method 1400 comprises closing the discharging switch to discharge the ESU through the resistor to provide the electrical protection to the ESU. The resistor is in series with the discharging switch. The discharging switch may be another NO switch.

In some embodiments, the method may comprise opening the second NC switch to disconnect the ESU and the resistor from the main power line to provide the electrical protection to the ESU. The second NC switch may be connected in series with the first NC switch.

In some embodiments, the method may comprise opening the third NC switch to disconnect the ESU from the resistor and the main power line to provide the electrical protection to the ESU. The third NC switch may be connected in series with the ESU.

In some embodiments, the method may comprise providing the electrical protection to the ESU by operating the second NC switch connected in series with the first NC switch and the third NC switch connected in series with the ESU in combination. In some examples, the method may comprise opening the second NC switch to disconnect the ESU and the discharging circuit from the main power line, and opening the third NC switch after opening of the second NC switch and after discharging of the ESU through the resistor, thereby achieving electrical protection for the ESU. In some examples, the method may comprise opening the third NC switch after discharging of the ESU through the resistor and opening of the second NC switch after opening of the third NC switch, thereby achieving electrical protection for the ESU.

In some embodiments, the method may comprise providing the electrical protection to the ESU by closing the NO switch that causes the ESU to discharge through the resistor. The resistor may be connected in parallel to the first NC switch.

In some embodiments, the method may comprise providing electrical protection to the ESU by operating a resistor connected in parallel to the first NC switch and a second NC switch connected in between the ESU and the parallel combination of the resistor and the first NC switch. More specifically, the method may comprise opening, the first NC switch connected in parallel to the resistor for causing the charging current to flow through the first diode or the second diode. The method may comprise closing the NO switch for discharging the ESU. The method may comprise opening, the second NC switch connected in between the ESU and the parallel combination of the resistor and the first NC switch, for disconnecting the ESU from the main power line, when the ESU is discharged.

In some examples, the NO switch, the first NC switch, and the discharging switch referred herein may be of same or different types and connectable in series or parallel configuration.

Fig. 15 discloses a module 300 for providing electrical protection to the ESU 10. As depicted in Fig. 15, the module 300 comprises a first main terminal, a second main terminal, a first ESU terminal, a second ESU terminal, and the electrical protection circuit 100.

The first and second main terminals are connected to the main power line. The second main terminal is configured for a lower electric potential than the first main terminal. The first ESU terminal is configured to be connected to a positive terminal of the ESU. The second ESU terminal configured to be connected to a negative terminal of the ESU.

The electrical protection circuit 100 comprises the first NC switch, the first diode, the NO switch, and the second diode. The first NC switch is configured to form a closed path for both charging current and discharging current flowing between the main power line and the ESU 10 during operation. An anode of the first diode is connected to the first main terminal and a cathode of the first diode is connected to the second main terminal. The second diode is connected in parallel with the NO switch with a cathode connected to the first main terminal and an anode connected to the second main terminal.

The module 300 is configured to provide the electrical protection to the ESU 10 by opening the first NC switch to disconnect the ESU 10 from the main power line and by closing the NO switch to bypass the ESU from the main power line.

The electrical protection circuit 100 may also comprise the discharging circuit. The discharging circuit may comprise the resistor in series with the discharging switch. The module 300 is configured to provide the electrical protection to the ESU 10 by closing the discharging switch thereby to discharge the ESU 10 through the resistor 60 in order to achieve the electrical protection for the ESU 10.

As the electrical protection circuit 100 is described in detail in conjunction with Figs. 1-13, repetition of description is omitted herein.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. An electrical protection circuit (100) for connecting an Energy Storage Unit, ESU (10), to a main power line (80), wherein the electrical protection circuit (100) comprising:
a first main terminal configured to be connected to the main power line (80);
a second main terminal configured to be connected to the main power line (80), wherein the second main terminal is configured for a lower electric potential than the first main terminal;
a first ESU terminal configured to be connected to a positive terminal of the ESU (10);
a second ESU terminal configured to be connected to a negative terminal of the ESU (10);
wherein the first main terminal is connected to the first ESU terminal via a first normally closed, NC, switch (20); and
a first diode (30) with an anode connected to the first main terminal, and a cathode connected to the first ESU terminal, wherein a parallel combination of the first NC switch (20) and the first diode (30) forms a closed path for a charging current and a discharging current flowing between the main power line (80) and the ESU (10) during operation;
wherein the first main terminal is connected to the second main terminal via a normally open, NO, switch (40) and a second diode (50) being connected in parallel with the NO switch (40) with a cathode connected to the first main terminal, and an anode connected to the second main terminal;
wherein the first NC switch (20) is configured to be opened thereby to disconnect the ESU (10) from the main power line (80), and the NO switch (40) is configured to be closed thereby to bypass the ESU (10) from the main power line (80) in order to achieve electrical protection for the ESU (10).

2. The electrical protection circuit (100) according to claim 1, further comprising:
a discharging circuit comprising a resistor (60) in series with a discharging switch (70), wherein the discharging circuit is connected between the first ESU terminal and the second ESU terminal, wherein the discharging switch (70) is a NO switch;
wherein the discharging switch (70) is configured to be closed thereby to discharge the ESU (10) through the resistor (60) in order to achieve the electrical protection for the ESU (10).

3. The electrical protection circuit (100) according to any of the preceding claims, further comprising:
a second NC switch (90) connected in series with the first NC switch (20), wherein the second NC switch (90) is configured to disconnect the ESU (10) and the discharging circuit from the main power line (80) thereby achieving electrical protection for the ESU (10).

4. The electrical protection circuit (100) according to any of claims 1-2, further comprising:
a third NC switch (95) connected in series with the ESU (10), wherein the third NC switch (95) is configured to disconnect the ESU (10) from the discharging circuit and the main power line (80) thereby achieving electrical protection for the ESU (10).

5. The electrical protection circuit (100) according to any of claims 1 or 2, further comprising:
a second NC switch (90) connected in series with the first NC switch (20); and
a third NC switch (95) connected in series with the ESU (10), wherein a combination of the second NC switch (90) and the third NC switch (95) is configured to disconnect the ESU (10) and the discharging circuit from the main power line (80) thereby achieving electrical protection for the ESU (10).

6. The electrical protection circuit (100) according to claim 5, wherein
the second NC switch (90) is configured to be opened to disconnect the ESU (10) and the discharging circuit from the main power line (80); and
the third NC switch (95) is configured to be opened after opening of the second NC switch (90) and discharging of the ESU (10) through the resistor (60), thereby achieving electrical protection for the ESU (10).

7. The electrical protection circuit (100) according to claim 5, wherein
the third NC switch (95) is configured to be opened after discharging of the ESU (10) through the resistor (60); and
the second NC switch (90) is configured to be opened after opening of the third NC switch (95), thereby achieving electrical protection for the ESU (10).

8. The electrical protection circuit (100) according to claim 1, further comprising:
a resistor (60) connected in parallel to the first NC switch (20), wherein the closing of the NO switch (40) causes the ESU (10) to discharge through the resistor (60) thereby achieving electrical protection for the ESU (10).

9. The electrical protection circuit (100) according to claim 1, further comprising:
a resistor (60) connected in parallel to the first NC switch (20); and
a second NC switch (90) connected in between the ESU (10) and the parallel combination of the resistor (60) and the first NC switch (20).

10. The electrical protection circuit (100) according to claims 1 and 9, wherein
the first NC switch (20) connected in parallel to the resistor (60) is configured to be opened for causing the charging current to flow through the first diode (30) or the second diode (50);
the NO switch (40) is configured to be closed for discharging the ESU (10); and
the second NC switch (90) connected in between the ESU (10) and the parallel combination of the resistor (60) and the first NC switch (20) is configured to be opened for disconnecting the ESU (10) from the main power line (80), when the ESU (10) is discharged.

11. The electrical protection circuit (100) according to any of the preceding claims, wherein the first NC switch (20), the second NC switch (90), the third NC switch (95), the NO switch (40), and the discharging switch (70) are of same or different types and connectable in series or parallel configuration.

12. The electrical protection circuit (100) according to any of the preceding claims,
wherein the ESU (10) is at least one of a battery unit or a supercapacitor; and
wherein the electrical protection circuit (100) is configured to maintain uninterrupted current flow for rest of system other than the ESU (10) during the bypassing.

13. A method (1400) for connecting an Energy Storage Unit, ESU (10), to a main power line (80), the method (1400) comprising:
opening (1402) a first normally closed, NC, switch (20) to disconnect the ESU (10) from the main power line (80),
wherein a parallel combination of the first NC switch (20) and a first diode (30) forms a closed path for a charging current and a discharging current flowing between the main power line (80) and the ESU (10) during operation,
wherein opening the first NC switch (20) causes the charging current to flow from the main power line (80) to the ESU (10) through the first diode (30) and
wherein opening the first NC switch (20) causes the discharging current to flow to the main power line (80) through a second diode (50) being connected in parallel with a normally open, NO, switch (40), thereby disconnecting the ESU (10); and
closing (1404) the NO switch (40) to bypass current flowing through the ESU (10), wherein closing the NO switch (40) causes the charging current and the discharging current to get diverted to least resistance path provided by the parallel combination of the closed NO switch (40) and the second diode (50) thereby bypassing the ESU (10);
wherein the electrical protection is provided to the ESU (10) by opening the first NC switch (20) to disconnect the ESU (10) from the main power line (80) and by closing the NO switch (40) to bypass the ESU (10) from the main power line (80).

14. The method (1400) according to claim 13, further comprising:
closing (1406) a discharging switch (70) to discharge the ESU (10) through a resistor (60) to provide the electrical protection to the ESU (10),
wherein the resistor (60) is in series with the discharging switch (70), wherein the discharging switch (70) is another NO switch.

15. The method (1400) according to any of claims 13-14, further comprising:
opening a second NC switch (90) to disconnect the ESU (10) and the resistor (60) from the main power line (80) to provide the electrical protection to the ESU (10), wherein the second NC switch (90) is connected in series with the first NC switch (20).

16. The method (1400) according to any of claims 13-14, further comprising:
opening a third NC switch (95) to disconnect the ESU (10) from the resistor (60) and the main power line (80) to provide the electrical protection to the ESU (10), wherein the third NC switch (95) is connected in series with the ESU (10).

17. The method (1400) according to any of claims 13 or 14, further comprising:
providing the electrical protection to the ESU (10) by operating a second NC switch (90) connected in series with the first NC switch (20) and a third NC switch (95) connected in series with the ESU (10) in combination.

18. The method (1400) according to claim 17, further comprising:
providing the electrical protection to the ESU (10) by opening the second NC switch (90) to disconnect the ESU (10) and the discharging circuit from the main power line (80) and opening the third switch (95) after opening of the second NC switch (90) and discharging of the ESU (10) through the resistor (60).

19. The method (1400) according to claim 17, further comprising:
providing the electrical protection to the ESU (10) by opening the third NC switch (95) after discharging of the ESU (10) through the resistor (60) and opening the second NC switch (90) after opening of the third NC switch (95).

20. The method (1400) according to claim 13, further comprising:
providing the electrical protection to the ESU (10) by closing the NO switch (40) that causes the ESU (10) to discharge through the resistor (60), wherein the resistor (60) is connected in parallel to the first NC switch (20).

21. The method (1400) according to claim 13, further comprising:
providing the electrical protection to the ESU (10) by operating a resistor (60) connected in parallel to the first NC switch (20) and a second NC switch (90) connected in between the ESU (10) and the parallel combination of the resistor (60) and the first NC switch (20).

22. The method (1400) according to claims 13 and 21, further comprising:
opening the first NC switch (20) connected in parallel to the resistor (60) for causing the charging current to flow through the first diode (30) or the second diode (50);
closing the NO switch (40) for discharging the ESU (10); and
opening the second NC switch (90) connected in between the ESU (10) and the parallel combination of the resistor (60) and the first NC switch (20) for disconnecting the ESU (10) from the main power line (80), when the ESU (10) is discharged.

23. The method (1400) according to any of claims 13-21, wherein the first NC switch (20), the second NC switch (90), the third NC switch (95), the NO switch (40), and the discharging switch (70) are of same or different types and connectable in series or parallel.

24. The method (1400) according to any of claims 13-22, further comprising:
maintaining an uninterrupted current flow for rest of system other than the ESU (10) during the bypassing, wherein the ESU (10) is at least one of a battery unit or a supercapacitor.

25. A module (300) for connecting an Energy Storage Unit, ESU, (10) to a main power line, the module (300) comprising:
a first main terminal configured to be connected to the main power line (80);
a second main terminal configured to be connected to the main power line (80), wherein the second main terminal is configured for a lower electric potential than the first main terminal;
a first ESU terminal configured to be connected to a positive terminal of the ESU (10);
a second ESU terminal configured to be connected to a negative terminal of the ESU (10); and
an electrical protection circuit (100) according to any of claims 1-12.
